# EUROPÄISCHE PATENTANMELDUNG

(11) **EP 1 516 697 A2**
(43) Veröffentlichungstag der Anmeldung: **23.03.2005**
(21) Anmeldenummer: 04021978.4
(22) Anmeldetag: 16.09.2004
(51) Int. Cl.: B23Q 7/03

(54) **Werkstücktransportvorrichtung für eine Durchlaufmaschine**

(30) Priorität: 19.09.2003 DE 10343955
(71) Anmelder: Homag Holzbearbeitungssysteme AG, 72296 Schopfloch (DE)
(72) Erfinder: Rathgeber, Peter, 72280 Dornstetten (DE); Kalmbach, Kurt, 72275 Alpirsbach (DE)
(74) Vertreter: Elbertzhagen, Otto, Dipl.-Ing.

(57) **Zusammenfassung**

Eine solche Werkstücktransportvorrichtung für eine die Werkstücke (13) im Durchlauf an dabei freiliegenden Seiten formgebend bearbeitende Maschine ist mit einem endlos umlaufenden Transportmittel ausgestattet, auf dessen Obertrum (4.1) die Werkstücke (13) reib- und/oder formschlüssig gehalten werden, und hat eine feststehende Führungsvorrichtung (1) für das Transportmittel, die eine dessen Obertrum (4.1) entlang der Transportstrecke aufnehmende Führungsschiene (2) aufweist. Das Transportmittel samt zugehöriger Führung für eine Werkstücktransportvorrichtung der eingangs genannten Art, welches für höhere Transportgeschwindigkeiten besser geeignet ist, ist ein Riemen (4) und die Führungsschiene (2) hat an ihrer Oberseite eine formschlüssig an den Riemen (4) angepaßte Laufrinne (3), aus der heraus der Riemen (4) nach oben hin vorsteht, wobei die Laufrinne (3) einen Boden (6) aufweist, in welchem mit einer Druckluftquelle verbundene Luftauslaßöffnungen (7) angeordnet sind.

## Beschreibung

Die Erfindung bezieht sich auf eine Werkstücktransportvorrichtung der im Oberbegriff des Patentanspruchs 1 näher bezeichneten Art.

Wie aus dem Dokument DE 100 32 672 A1 hervorgeht besteht in bekannter Ausführung solcher Werkstücktransportvorrichtungen das Transportmittel aus einer Kette, die mit Gleitelementen oder Laufrollen ausgestattet ist, über welche die laufende Kette sich auf entsprechenden Führungsflächen der Führungsschiene abstützt. Die genannten Kettenglieder bestehen aus eine Vielzahl von Kettengliedern, die gelenkig miteinander verbunden sind. In bewährter Bauform sind die verwendeten Transportketten insgesamt aus Stahl gefertigt, um einen spielfreien Lauf zu erzielen. Dennoch stellen sich bei den bekannten Transportketten vor allem dann Probleme ein, wenn es um die Bewältigung höherer Transportgeschwindigkeiten geht. Hierbei spielt nicht nur das Gewicht der Kette eine Rolle sondern auch der sogenannte Polygoneffekt, der durch den Lauf der einzelnen Kettenglieder um die Umlenkräder herum bedingt ist. Dieser Effekt bedingt Schwingungen, die vor allem auch in das fördernde Obertrum der Transportkette übertragen werden und für einen erheblichen Verschleiß verantwortlich sind.

Aus dem Dokument DE 196 36 161 A1 ist ein Förderband für einen Endlosförderer mit einer Unterdruckeinrichtung bekannt. Das hierzu verwendete Förderband ist an seiner Förderseite mit einer Dichtschicht aus einem weichelastischen Material versehen, in der eine Vielzahl von hintereinander angeordneten Unterdruckvertiefungen angeordnet ist. Hierdurch wird auf der Transportseite des Förderbandes eine Ansaugfläche gebildet, um die auf dem Förderband transportierten Gegenstände mittels Unterdruck festhalten zu können.

Das Dokument DE 102 14 554 A1 beschreibt ebenfalls Förderbänder zum Transport von Werkstücken durch eine Holzbearbeitungsmaschine hindurch. Diese Bänder sind durch Führungskörper geführt, welche sich annähernd über die gesamte Bandlänge erstrecken. Zum Spannen der Werkstücke sind auf den Förderbändern Spannvorrichtungen angeordnet, die in besonderer Ausführung entweder pneumatisch oder mittels Vakuum betätigt werden können.

Der Erfindung liegt die Aufgabe zugrunde, für eine Werkstücktransportvorrichtung der eingangs genannten Art ein Transportmittel samt zugehöriger Führung vorzusehen, welches für höhere Transportgeschwindigkeiten besser geeignet ist.

Diese Aufgabe wird bei einer Werkstücktransportvorrichtung mit den Merkmalen des Oberbegriffs des Anspruchs 1 durch die kennzeichnenden Merkmale des Patentanspruchs 1 gelöst.

Für die Erfindung ist wesentlich, daß neben den geringeren Massen des Transportriemens, der endlose Transportriemen sich im Umlenkbereich leicht in eine Kreisform biegen läßt, also nicht die durch die einzelnen Kettenglieder bedingte Polygonform einer Kette im Umlenkbereich einnimmt. Schon deshalb läßt sich mit dem Transportriemen eine höhere Transportgeschwindigkeit realisieren, und es tritt der störende Polygoneffekt nicht auf. Der im Bereich der Laufrinne von Stützluft getragene und ggf. geführte Transportriemen schwimmt mit seinem fördernden Obertrum sozusagen auf einem Luftkissen, womit die auftretende Reibung beim Riemenlauf minimiert ist, was ebenfalls für eine Erhöhung der Fördergeschwindigkeit von Vorteil ist.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen Vertikalschnitt durch die Führungsvorrichtung einer Werkstücktransportvorrichtung gemäß der Erfindung und
- Fig. 2: in vergrößerter Darstellung einen Vertikalschnitt allein durch die Führungsschiene der Führungsvorrichtung nach Figur 1, jedoch ohne den zugehörigen Transportriemen.

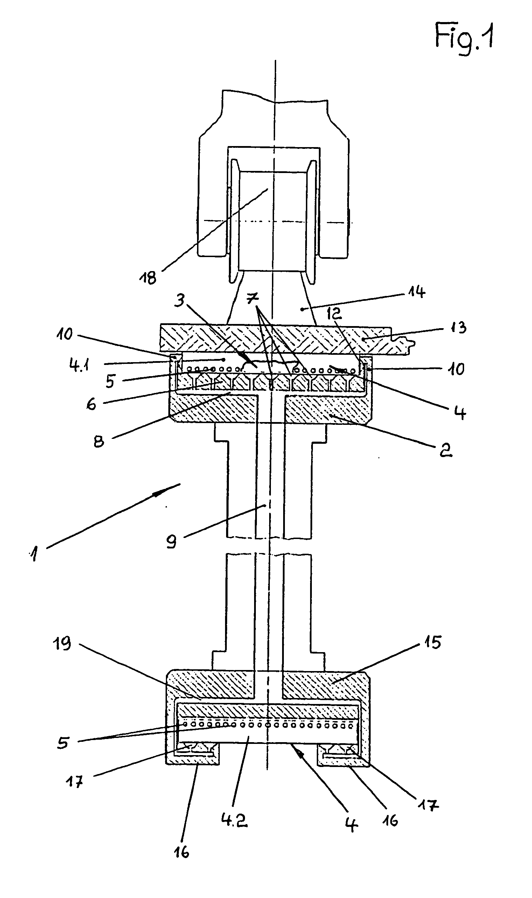

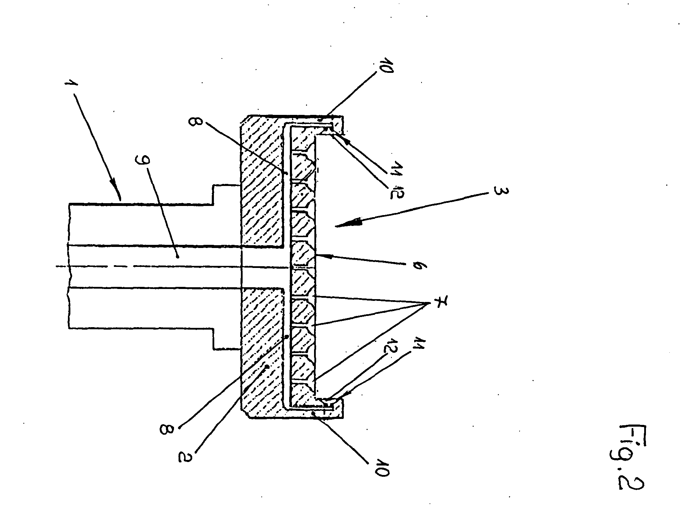

Im einzelnen gibt Figur 1 eine Führungsvorrichtung 1 mit einer entlang deren Oberseite angeordneten Führungsschiene 2 wieder. Wie dazu insbesondere Figur 2 veranschaulicht, weist die Führungsschiene 2 eine nach oben offene Laufrinne 3 auf, die einen Transportriemen 4 aufnimmt, der in Figur 1 dargestellt ist. Der Transportriemen 4 besteht aus einem geeigneten Kunststoffmaterial, welches mittels einer aus Stahlseilen bestehenden Einlage 5 verstärkt sein kann.

Die Laufrinne 3 der Führungsschiene 2 ist nach unten durch einen Boden 6 begrenzt, der eine Vielzahl von Luftauslaßöffnungen 7 aufweist, die sich zu ihrer nach oben hin liegenden Mündung kelchartig erweitern. Die Luftauslaßöffnungen 7 sind über die Breite und die Länge des Bodens 6 der Laufrinne 3 gleichmäßig verteilt und an Versorgungskanäle angeschlossen, die mit einem zentralen Kanal 9 in Verbindung stehen. Über diese Kanäle 8 und 9 sind die Luftauslaß-öffnungen 7 des Laufrinnen-Bodens 6 mit einer Druckluftquelle verbunden.

Der Boden 6 der Laufrinne 3 ist plan eben und horizontal ausgerichtet. Seitlich ist die Laufrinne 3 durch aufrechte Wandstege 10 begrenzt, deren Innenseiten 11 jeweils in einer Vertikalebene liegen und dementsprechend rechtwinklig zum Boden 6 verlaufen. An den Innenseiten 11 der Wandstege 10 finden sich ebenfalls Luftauslaßöffnungen 10, die an den die Luftauslaßöffnungen 7 im Boden 6 versorgenden Kanäle 8 angeschlossen sind.

Über die Luftauslaßöffnungen 7 im Boden 6 der Laufrinne 3 wird bei darin aufgenommenem Riemen 7 Stützluft eingeblasen, um das Obertrum 4.1 des Riemens 4 mit möglichst geringer Reibung auf dem Boden 6 der Führungsschiene 2 gleiten zu lassen. Je nach dem zu treibenden Aufwand kann die Stützluft auch in einem solchen Maß über die Luftauslaßdüsen 7 in die Laufrinne 3 eingeblasen werden, daß der Transportriemen 4 in der Schwebe gehalten wird und dadurch beim Förderbetrieb sozusagen auf einem Luftkisssen schwimmt.

Die Seitenführung des Obertrums 4.1 des Transportriemens 4 übernehmen die an der Führungsschiene 2 seitlich der Laufrinne 3 nach oben vorstehenden Wandstege 10 mit ihren Innenseiten 11. Um an den Längsseiten des Riemens 4 die Reibung an den Innenseiten 11 der Wandstege 10 gering zu halten oder sogar auszuschalten, wird über die dort vorhandenen Luftauslaßöffnungen 12 weitere Stützluft in die Laufrinne 3 eingeblasen.

Der Transportriemen 4 steht mit seinem Obertrum 4.1 nach oben aus der Laufrinne 3 hervor, er liegt also mit der Werkstückauflagerseite des Obertrums 4.1 höher als die Oberkante der Wandstege 10 an der Führungsschiene 2. So kann, wie in Figur 1 wiedergegeben, auf dem Obertrum 4.1 des Transportriemens 4 ein Werkstück 13 flachliegend transportiert werden, welches in seitlicher Richtung über die Führungsschiene 2 vorsteht. Die Werkstücke 13 sind vornehmlich plattenförmig oder brettförmig ausgebildet, und in der betreffenden Durchlaufmaschine wird die formgebende Bearbeitung, so auch eine spannehmende Bearbeitung, zumindest in einer der in Durchlaufrichtung liegenden Längsseiten der Werkstücke 13 vorgenommen. Die an dem Transportriemen austretende Stützluft dient dabei zusätzlich als Sperrluft, um Späne und/oder Staubpartikel in der Laufrinne 3 fernzuhalten. Um die Werkstücke 13 auf dem Obertrum 4.1 des Transportriemens 4 niederzuhalten, ist eine Oberdruckvorrichtung 14 vorgesehen, bei der es sich um einen an Rollen 18 geführten Riemen handeln kann.

Die Führungsvorrichtung 1 weist ferner eine unterhalb der Führungsschiene 2 angeordnete Hohlschiene 15 auf, die nach unten hin offen ist. In dieser Hohlschiene 15 wird das Untertrum 4.2 des Transportriemens 4 geführt, wozu die Hohlschiene 5 das Untertrum 4.2 mittels Gleitstegen 16 untergreift, deren Oberseiten das Untertrum 4.2 des Transportriemens 4 abstützen. Bei diesen Auflagerstegen kann es sich um Gleitstege handeln. Zur Verminderung der Gleitreibung zwischen dem Untertrum 4.2 des Riemens 4 und den Auflagerstegen 16 wird auch hier Stützluft eingesetzt. Dazu weisen die Auflagerstege 16 der Hohlschiene 15 an ihren nach oben hin liegenden Seiten ebenfalls Luftauslaßöffnungen 17 auf, die über Kanäle 19 mit dem zentralen Kanal 9 verbunden sind.

## Patentansprüche

1. Werkstücktransportvorrichtung für eine die Werkstücke im Durchlauf an dabei freiliegenden Seiten formgebend bearbeitende Maschine mit einem endlos umlaufenden Transportmittel, auf dessen Obertrum die Werkstücke reib- und/oder formschlüssig gehalten werden, und mit einer feststehenden Führungsvorrichtung für das Transportmittel, die eine dessen Obertrum entlang der Transportstrecke aufnehmende Führungsschiene aufweist,
**dadurch gekennzeichnet,**
**daß** das Transportmittel ein Riemen (4) ist und die Führungsschiene (2) an ihrer Oberseite eine formschlüssig an den Riemen (4) angepaßte Laufrinne (3) hat, aus der heraus der Riemen (4) nach oben hin vorsteht, wobei die Laufrinne (3) einen Boden (6) aufweist, in welchem mit einer Druckluftquelle verbundene Luftauslaßöffnungen (7) angeordnet sind.

2. Werkstücktransportvorrichtung nach Anspruch 1,
**dadurch gekennzeichnet,**
**daß** die Laufrinne (3) von aufrechten, den Riemen (4) an seinen beiden Längsseiten führenden Wandstegen (10) beidseitig längsseits begrenzt ist.

3. Werkstücktransportvorrichtung nach Anspruch 2,
**dadurch gekennzeichnet,**
**daß** der Boden (6) der Laufrinne (3) eben sowie horizontal ausgerichtet ist.

4. Werkstücktransportvorrichtung nach Anspruch 3,
**dadurch gekennzeichnet,**
**daß** der Riemen (4) im Querschnitt profiliert ist und die Wandstege (10) der Laufrinne (3) Innenseiten (11) haben, die winklig zum Boden (6) der Laufrinne (3) stehen.

5. Werkstücktransportvorrichtung nach einem der Ansprüche 2 - 4,
**dadurch gekennzeichnet,**
**daß** an den Innenseiten (11) der seitlichen Wandstege (10) der Laufrinne (3) ebenfalls mit einer Druckluftquelle verbundene Luftauslaßöffnungen (12) angeordnet sind.

6. Werkstücktransportvorrichtung nach einem der Ansprüche 1 - 5,
**dadurch gekennzeichnet,**
**daß** die Führungsvorrichtung (1) eine unterhalb der Führungsschiene (2) angeordnete Hohlschiene (15) zur Aufnahme des Untertrums (4.2) des Riemens (4) aufweist, die zumindest einen das Untertrum (4.2) untergreifenden Auflagersteg (16) hat.

7. Werkstücktransportvorrichtung nach Anspruch 6,
**dadurch gekennzeichnet,**
**daß** der zumindest eine Auflagersteg (16) der Hohlschiene (15) an seiner obenliegenden Seite ebenfalls mit mit einer Druckluftquelle verbundenen Luftauslaßöffnungen (17) versehen ist.

8. Werkstücktransportvorrichtung nach einem der Ansprüche 1 - 7,
**dadurch gekennzeichnet,**
**daß** sich die Luftauslaßöffnungen (7, 12; 17) in der Laufrinne (3) und/oder an der Hohlschiene (15) zu ihrer Mündung hin etwa kelchförmig erweitern.

9. Werkstücktransportvorrichtung nach einem der Ansprüche 1 - 8,
**dadurch gekennzeichnet,**
**daß** der Riemen (4) aus Kunststoff mit einer Einlage (5) aus Stahlseilen besteht.
